# EUROPEAN PATENT SPECIFICATION

(11) **EP 1 189 405 B1**
(45) Date of publication and mention of the grant of the patent: **15.10.2008**
(21) Application number: 00402528.4
(22) Date of filing: 13.09.2000
(51) Int. Cl.: H04L 29/06

(54) **Network system, method and server for data transfer**
Netzwerk, Verfahren und Server zur Datenübertragung
Système de réseau, méthode et serveur pour tranférer des données

(43) Date of publication of application: 20.03.2002
(73) Proprietor: MOTOROLA, INC., Schaumburg, IL 60196 (US)
(72) Inventor: Martinez, Georges, 75013 Paris (FR); Garrec, David, 75015 Paris (FR); Harroch, Erwan, 75014 Paris (FR)
(74) Representative: Jepsen, René Pihl

(56) References cited:
- US-A- 6 097 733
- HAM K ET AL: "WIRELESS-ADAPTATION OF WWW CONTENT OVER CDMA" IEEE INTERNATIONAL WORKSHOP ON MOBILE MULTIMEDIA COMMUNICATIONS, 15 - 17 November 1999, pages 368-372, XP000937759 San Diego, CA, US

## Description

### Field of the Invention

This invention relates to network systems, and particularly those composed of wired (e.g., Internet) and wireless networks (e.g., DVB-T, UMTS).

### Background of the Invention

In the field of this invention, such systems may have servers located in the fixed network, and multimode terminals for user access. When multiple heterogeneous networks are available to terminals due to the increasing opportunities of wireless access to services and content, users request ubiquitous access, regardless of terminal capabilities, radio technology coverage and user behaviour.

An example of a system using both wired and wireless access may be found in "Wireless-adaptation of WWW Content over CDMA", Ham, K., IEEE Intl. Workshop on Mobile Multimedia Communications, 15 Nov. 1999, pp. 368-372, which refers to serial communication over a wired and wireless network.".

An example of a wireless communication system may be found in United States Patent no. US 6,097,733 which refers to multicasting of multimedia information over a plurality of wireless links.

In such a context, a user may face one or more of the following situations:
- there may be no appropriate available Quality of Service (QoS) characteristics (e.g., latency, bandwidth, jitter, etc.) suited for a required application;
- there may be no appropriate delivered content for the specific user situation (e.g., delivery of content to a user may be constrained by user's bandwidth availability, location, display, etc.); and
- there may be no service continuity with user mobility (e.g., with change in user's network, or change in user's terminal).

The user's terminal is in a radio environment in which it has to use one radio technology among several. The terminal will select the most appropriate radio technology according to criteria such as signal strength, required/desired QoS, cost for the terminal, etc.

However, the radio technology choice made by the terminal may not be optimal, for example:
- for the radio and fixed networks, because they can be or become congested due to user selection; and
- for the server, because it must tailor the data (content, quality, etc.) according to the radio technology being used.

Furthermore, in most cases the server will not be enabled for managing user mobility among multiple radio technologies if the terminal is multimode.

The terminal middleware can be modified in such a way that it constantly monitors the available radio technologies and selects the most appropriate one without connection drop. Although this approach provides service continuity over multiple radio technologies, it is user centric, and does not allow the network to determine if other choices would be most appropriate. Furthermore, the application may experience strong transport QoS variations leading anyway to service disconnection.

Servers can be upgraded with additional features such as format translation, requiring from application provider to constantly improve the services provided by the server, rather than the content. However, in the case of multicast to users with different capabilities, the server would have to specifically tailor the contents for each user.

In most cases, there is no correspondence between the user-specific situation (mobility, user-specific behaviour, etc.) and the content presentation. As a result, radio and network resources may be non-optimally used. Furthermore, there is no point in the network where the terminal choices and allocations are gathered, in such a way that system wide optimizations could be performed.

It is an object of the present invention to provide a network system, method for transfer of data and server for use therein wherein the abovementioned disadvantage(s) may be alleviated.

### Statement of Invention

In accordance with a first aspect of the present invention there is provided a network system, including a wired network and a wireless network, as claimed in claim 1.

In accordance with a second aspect of the present invention there is provided access server, for use in a network system including a wired network and a wireless network, as claimed in claim 3.

In accordance with a third aspect of the present invention there is provided method, for transfer of data between a data server and a terminal across a wired network and a wireless network, as claimed in claim 8.

### Brief Description of the Drawing(s)

One system and method for joint operation of heterogeneous networks and resource use optimisation in a composite radio environment incorporating the present invention will now be described, by way of example only, with reference to the accompanying drawing(s), in which:
FIG. 1 shows a schematic diagram of a composite radio system utilizing the present invention;
FIG. 2 shows a schematic diagram illustrating organisation of the composite radio system of FIG. 1, with multiple composite access servers (CASs);
FIG. 3 shows a schematic diagram illustrating addressing principles used in the system of FIG. 1;
FIG. 4 shows a block-schematic diagram illustrating call modelling principles used in the system of FIG. 1;
FIG. 5 shows a block-schematic diagram illustrating major steps in a terminal-originated call in the system of FIG. 1;
FIG. 6 shows a block-schematic diagram illustrating session set-up procedure in the system of FIG. 1;
FIG. 7 shows a block-schematic diagram illustrating cellular connection set-up procedure in the system of FIG. 1;
FIG. 8 shows a block-schematic diagram illustrating broadcast connection set-up procedure in the system of FIG. 1;
FIG. 9 shows a block-schematic diagram illustrating transmission procedure in the system of FIG. 1; and
FIG. 10 shows a block-schematic diagram illustrating an example of mobility management procedure in the system of FIG. 1.

### Description of Preferred Embodiment(s)

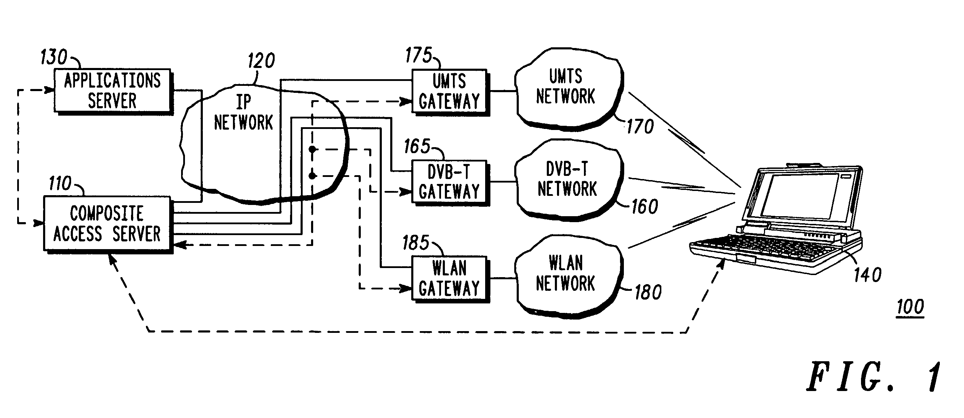

In a preferred embodiment of the present invention, the architecture of a composite radio system is based on a special server, hereafter termed a Composite Access Server (CAS), acting as a gateway and a proxy. Such an architecture is shown in FIG. 1.

### 1 Composite Radio System Architecture

In the composite radio system 100 of FIG. 1, one or more Composite Access Server(s) (CAS) 110 are provided at the border between two domains:
- On one side of the CAS(s) 110 is the Internet world. In this domain 120, application servers 130 and WEB sites (not shown) stand. Usually, the content servers do not know the details of transmission means used by mobile terminals 140. The network layer in this domain is best demand driven.
- On another side of the CAS(s) 110 is the wireless domain 150. It is composed of sub-networks, each one being actually the core network of an operator operating a specific technology, e.g., a broadcast (DVB-T) network 160, a cellular (e.g., GPRS or UMTS) network 170, and a WLAN (e.g., Hiperlan 1) network 180. The network between the CAS and the core networks is packet-switch based, since this should offer better quality of service (QoS) characteristics than the Internet. On this network, the core networks 160, 170 and 180 are accessed via operator-specific gateways. If a core network operates multiple technologies, this is transparent to the CAS.

On the Internet side, the CAS 110 negotiates on behalf of the user the service profile the user wants to connect. The main goal with this approach is to limit the communications on the wireless side. One requirement is that the CAS holds sufficient information about the user profile and preferences.

The CAS 110 continuously evaluates the usage of the wireless spectrum occupied by the mobile users and optimizes it on a global basis. The actions the CAS can perform for this purpose (with support of the application provider) are, among others, splitting of data streams over multiple technologies based on QoS and relevance parameters, and content re-negotiation.

The CAS 110 can also act as a service proxy and may provide added-value services such as mapping of multicast transmission on broadcast spectrum, roaming or handover between technologies, content transcoding, QoS filtering, and re-assignment of technologies on the available spectrum.

In order to perform the functionalities mentioned above, two signaling links are required:
- between the CAS 110 and the application servers 130, and
- between the CAS 110 and the mobile terminal 140,

One more signaling link can be included if a cooperation mechanism exists between the CAS 110 and the radio access network gateways 165, 175 and 185.

The signaling links are derived from principles described in the publications 'Generic Signaling Protocol: Architecture, Model, and Services', P. Miller and P. Turcu, IEEE Transactions on Communications, Vol. 40, No 5, May 1992, and 'Generic Signaling Protocol: Switching, Networking, and Interworking', P. Miller and P. Turcu, IEEE Transactions on Communications, Vol. 40, No 5, May 1992. Hereafter, these signaling links will be referred to commonly referred to as Signaling Link for Access Entities (SP/A).

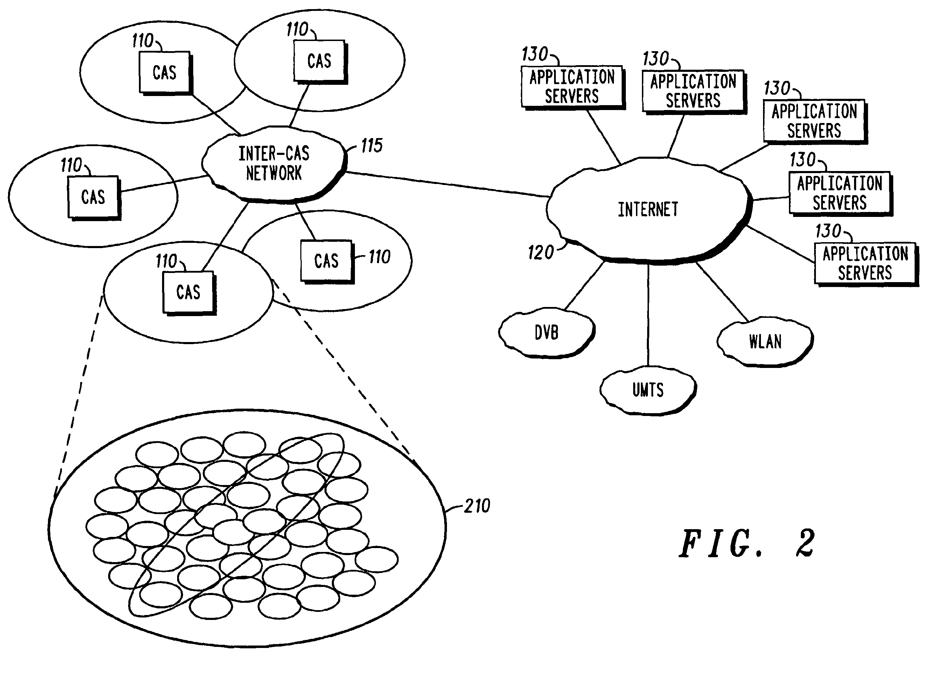

The CAS 110 provides call control functionality and performs intelligent routing of flows. From a wider system standpoint, the CAS 110 controls the traffic over a limited geographical area, where multiple technologies are available. To control larger areas, a network of CASs is implemented for instance as a "meta-core network" as suggested in FIG. 2.

As can be seen in FIG. 2, a plurality of CASs 110 communicate (via an inter-CAS network 115) with the Internet domain 120 (including application servers 130). The CASs 110 respectively provide different geographical coverage areas 210 (only one of which is shown) in which wireless services such as DVB, UMTS and WLAN are provided. It will be appreciated that a communication between a terminal (not shown in FIG. 2) and an application server 130 server results in the subset shown in FIG. 1.

### 2 Addressing principles and protocol stacks

All blocks in the architecture are interconnected using an IP protocol. As will be explained in further detail below, in order to simplify addressing of the various blocks, as well as simplifying the CAS functionalities while matching the architecture requirements, an appropriate addressing scheme is set up. Further, protocol stacks are arranged in the different entities.

### 2.1 Addressing

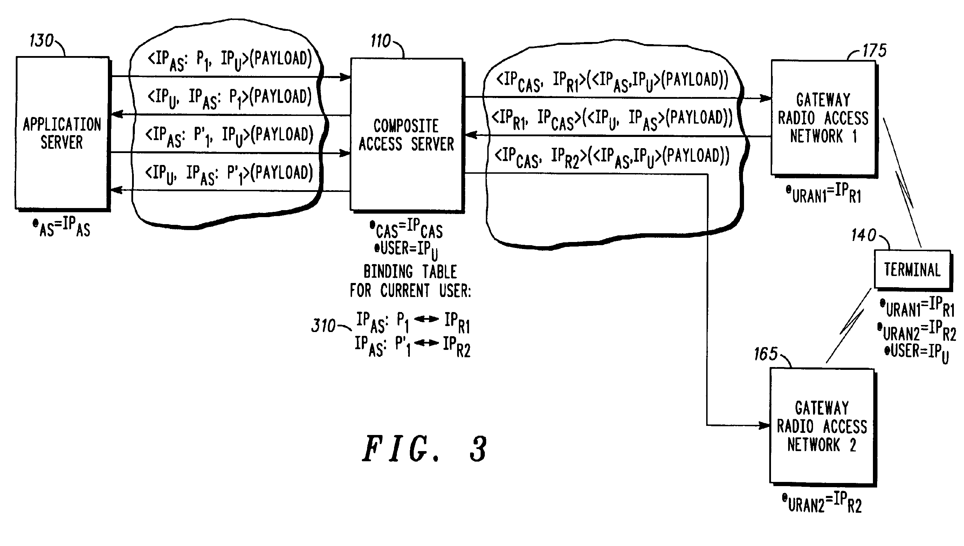

Referring now also to FIG. 3, the addressing scheme is based on that of the publication 'Flexible Network Support for Mobile Hosts', X. Zhao, C. Castellucia and M. Baker, Mobile Networks and Applications 1999, which makes it possible to reach a user using simultaneously multiple links, in an IP context. The addressing scheme must take into account the facts that:
- IP protocol principles (e.g., that one IP address identifies a network access point) must be respected;
- the server does not necessarily know the terminal interface IP address for each radio technology at connection set-up;
- the IP address/port is only a temporary identification of the radio technology(ies) to reach the user from the network; and
- the client-server traffic will be strongly asymmetrical, server-client being the dominant direction.

In the server domain, it is necessary to identify the flows addressed to the client. Two flows are different when they show different characteristics such as the required QoS or the priority, and when only the application server is able to build the data stream accordingly. As a consequence, each flow can be mapped on a different transport protocol, and different application flows can also be multiplexed at the transport layer.

As a result, a flow or a set of flows will be identified at least by the set <source:port, destination>. The source address is the application server address. The port is associated with the source address and differentiates transport streams characteristics. The destination address is the one from the user, registered at the CAS.

On the CAS-client side, a mapping of a transport stream into a selected radio transmission will be identified by the set <source, destination> IP addresses. The source IP address is the CAS IP address while the destination address is the terminal address in a specific radio technology. The packets are tunnelled from the CAS to the user terminal radio interface. The destination address (external address of the IP/IP tunnel) is the temporary address given by the radio access network to the radio interface for this terminal interface to be accessed through an IP network.

One function of the CAS is then to encapsulate transport flows in the Internet side, for delivery in the wireless domain side, and in reverse to de-capsulate packets from the user to route them to the server, as illustrated in FIG. 3. Since the addressing principles are similar to mobile IP, the CAS can be identified to the home agent while the terminal would be foreign agents to be addressed simultaneously.

The addressing principles used in the composite radio systems architecture of FIG. 1 and 2 are illustrated in FIG. 3. As can be seen from FIG. 3, the CAS 110 dynamically adapts the binding table 310 for each user, based on the traffic characteristics, the transport stream characteristics, the QoS reqired by the streams versus the one proposed on each link, on a per-user basis, and at system level. The traffic characteristics are either measured or explicitly carried with the SP/A signaling links mentioned in earlier. Interworking with content servers not supporting SP/A is possible, but the CAS must rely on its traffic characteristics measurement means to optimize flow handling.

It is to be noted that in the example shown in FIG. 3, in case of an assured transport protocol such as TCP while using a unidirectional transmission technology (gateway 165), the CAS may have to provide protocol translation means in order to emulate an end-to-end (TCP) connection. If the CAS is to act as a service proxy (e.g., for content filtering/transcoding), then the binding table would need to be more complex. It would need in particular to bind content objects to destination addresses, rather than just source addresses/ports.

On the Internet side, it is preferred to distinguish transport flows per port number instead of address, in order to facilitate priority handling of flows in case stateless QoS protocols (such as DiffServ) are used.

On the wireless side, tunneling is applied to the original packets, in order to keep end-to-end syntax on the received packets. Reverse tunneling is a desirable option when bi-directional radio technology is in use. It can serve in particular to transport TCP acknowledgements, or RTCP reports. A tunneling approach enables the user to be accessed via any radio technology or sub-network, provided that the CAS is informed of possible networks.

On mobile IP enabled networks, and in case of availability of static addresses for users in a specific radio technology, packets originating from the CAS may experiment a second tunneling between the home radio access network gateway, and the foreign one. In such cases, some form of optimization (e.g., header compression) may be needed.

In the context of a network of CASs, the concept of home CAS and foreign CAS can be introduced. Then, mobile IP principles may be used for mobility management.

### 2.2 Protocol stacks

The general principle used in arranging protocol stacks is to separate the control plane from the user plane. Thus, flows from each plane can be independently mapped on the most appropriate transport protocol, and transmission technology.

The control plane actually addresses how the SP/A protocol for call control is distributed and communications are established. The SP/A is distributed over the client, the server, and the CAS. Because of its vital importance in the system operations, it preferably uses the most reliable link to reach the terminal (which would be the cellular air interface in most cases).

### 3 Call model principles

The composite radio system under consideration involves at least five physical entities, and distinction is made between the application and the session layers. The physical entities are the terminal, the composite access server, the application server, the broadcast technology gateway, and the cellular (bi-directional) technology gateway.

Terminal originated call set up is described below. Similar principles can be applied for terminal terminated calls.

### 3.1 Modeling principles

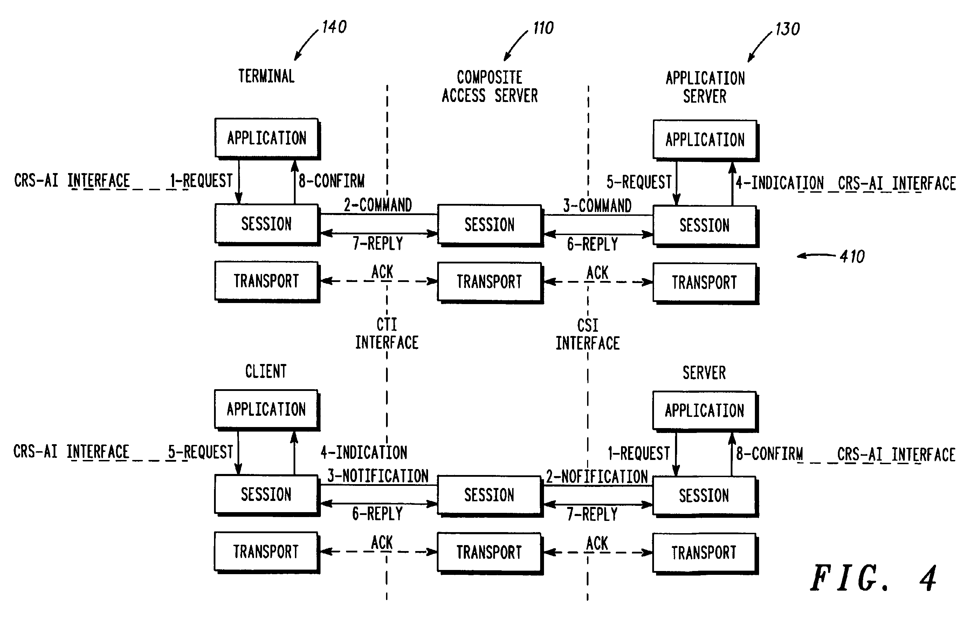

Referring now also to FIG. 4, the call model used is based on a client-server model, in which the terminal runs the client side of the user application and the application server runs the server side of the user application. The composite access server is in principle only visible at the session layer. As a result, the session layer is distributed over three entities. The session layer software can be seen as a middleware with the function of running the services supported by the functions implemented in the composite access server.

The user application is connected to the session layer through an interface called the Composite Radio System Application Interface (CRS-AI). The primitives exchanged on this interface can be considered as the Application Programming Interface (API) needed to support the CRS concept.

The terminal and the composite access server communicate via the CAS-Terminal Interface (CTI). Messages exchanged on this interface are part of the session control protocol.

The application server and the composite access server communicate via the CAS-Server Interface (CSI). Messages exchanged on this interface are also part of the session control protocol.

A transaction can be initiated either by the client or the server using a request primitive on the CRSI primitive. When the client starts the transaction, it transmits command messages at the session level, to the peer entity. A session level reply message is expected. When the server starts the transaction, it transmits notification messages at the session level, to the peer entity. As in the previous case, session level reply messages are expected.

The underlying transport protocol is assumed to provide assured transmission of the messages. In an IP context, TCP would provide such service.

### 3.2 Call model

The call model described below is given for clarification on how the different entities in the composite radio system exchange information at the session level. It is to be noted that call model described is simply one possible implementation, not unique, and that other implementations may alternatively be used..

Terminal originated call set up is organized in three procedures: session set-up, radio connection set-up (different for cellular and broadcast), and transmission. Each procedure is initiated by a request/indication issued from/to the application layer to/from the session layer. The session layer 410 is distributed between the terminal, the composite access server, and the application server. A link keeping procedure is also used in order to highlight that the link quality may be adapted to fit the application requirements as well as the transport time varying conditions.

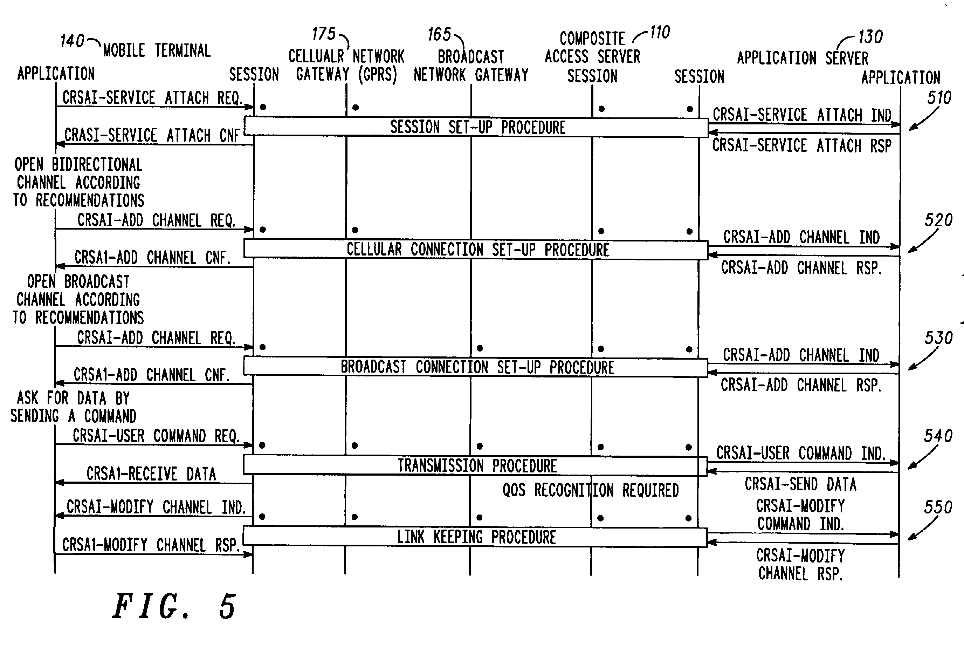

Figure 5 depicts a generic message sequence chart (indicating particularly the entities involved in each procedure of the call set-up) and shows the major steps in a terminal originated call.

The primitives in the CRSI interface consist of:
- service addition (equivalent to an application session),
- channel creation/addition (preferably one per QoS class),
- application command (e.g., send data), and
- channel attribute modification.

In the example above, after session set-up (step 510), the terminal is recommended to open two channels with different QoS attributes. The session layer finds out (again, based on CAS recommendation) that it is better to open one transport link per application channel. In other circumstances, the session layer could have mapped both application channels on the same transport link. As shown in FIG. 5, after session set-up (step 510), the following steps are performed: cellular connection set-up (step 520); broadcast connection set-up (step 530); transmission (step 540); and link keeping (step 550).

### 3.2.1 Session set-up

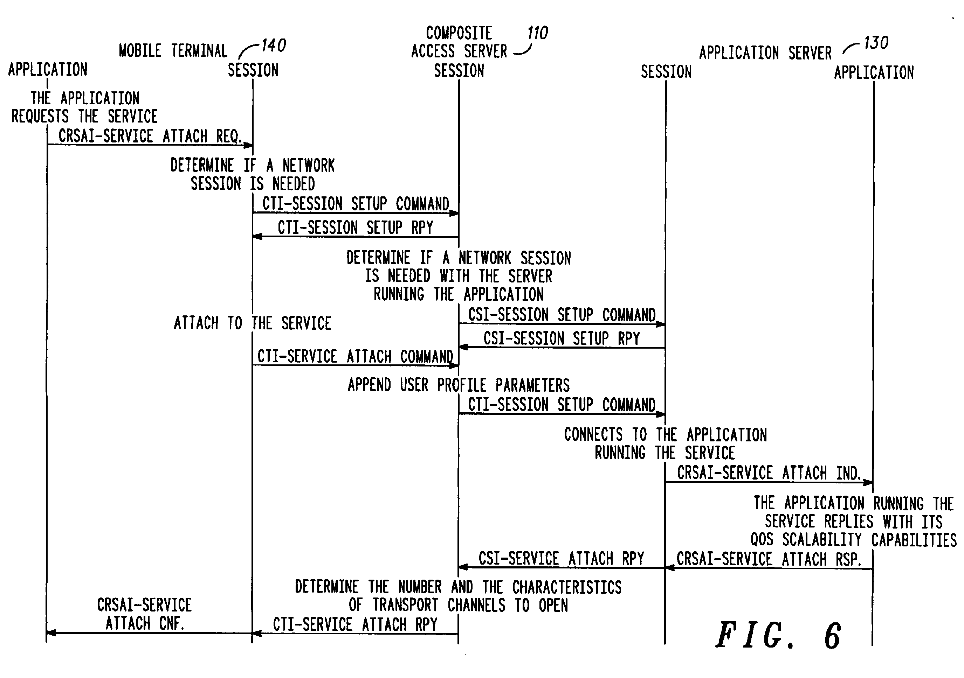

FIG. 6 shows the session set-up step 510 in more detail. The session set-up procedure consists of the establishment of a signaling link between the terminal 140, the composite access server 110 and the application server 130. The terminal selects the most reliable radio link. During this procedure, the composite access server derives the most appropriate configuration for (simultaneous) usage of multiple radio access networks. The assumption is that the composite access server knows sufficiently about the terminal environment, terminal capabilities and user preferences, as well as about the application scalability properties. The composite access server recommends to the mobile terminal the preferred setup for the application (number of application channels, bit rates, delay, etc.), and for the session layer (number of radio links; QoS to provision, etc.).

It is assumed that the gateways from the radio access networks may be able to provide information about achievable capacity at the terminal location, prior to actual reservation. Instead, a default value may be provided.

### 3.2.2 Cellular connection set-up

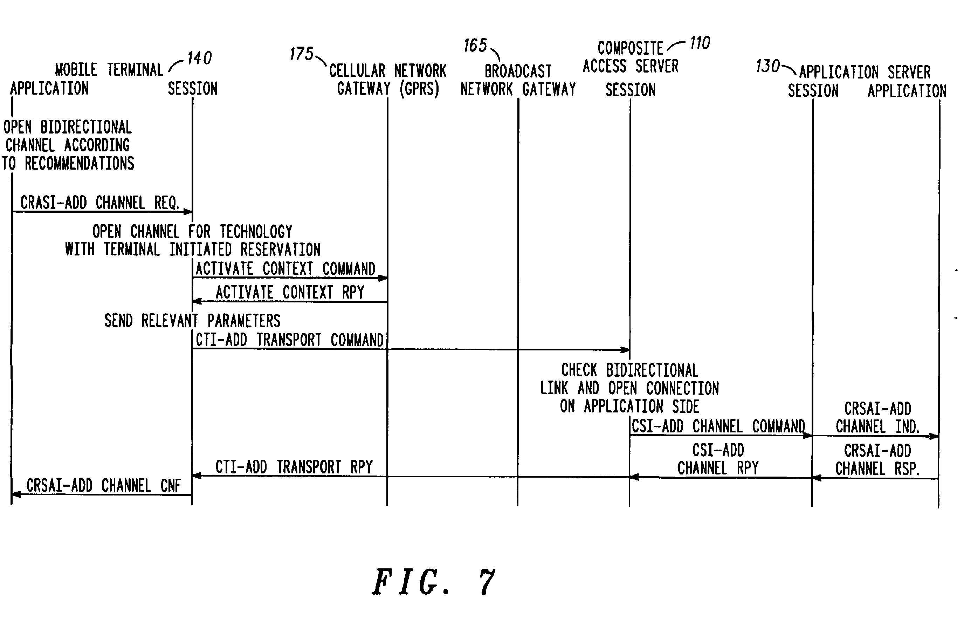

FIG. 7 shows the cellular connection set-up step 520 in more detail. In cellular networks like GPRS, the terminal is asked to initiate the packet data context, even for incoming calls, in order to achieve the appropriate bi-directional QoS provision from the terminal to the cellular gateway. This is why the application primitive CRSI-AddChannelReq triggers connection to cellular. The terminal initiates the connection in the cellular technology based on the QoS parameters provided by the composite access server. Once established, the terminal reports back to the composite access server the precise QoS parameters granted. Then, the composite access server establishes the connection with the application server. A confirmation is sent to the terminal once the application confirms the link characteristics.

When the terminal asks for a context activation, it is assumed that it is already attached to the packet data service. If this is not the case, then a preliminary packet data service attach procedure would be required. The context activation will be required in most cases in order to adapt the QoS parameters.

### 3.2.3 Broadcast connection set-up

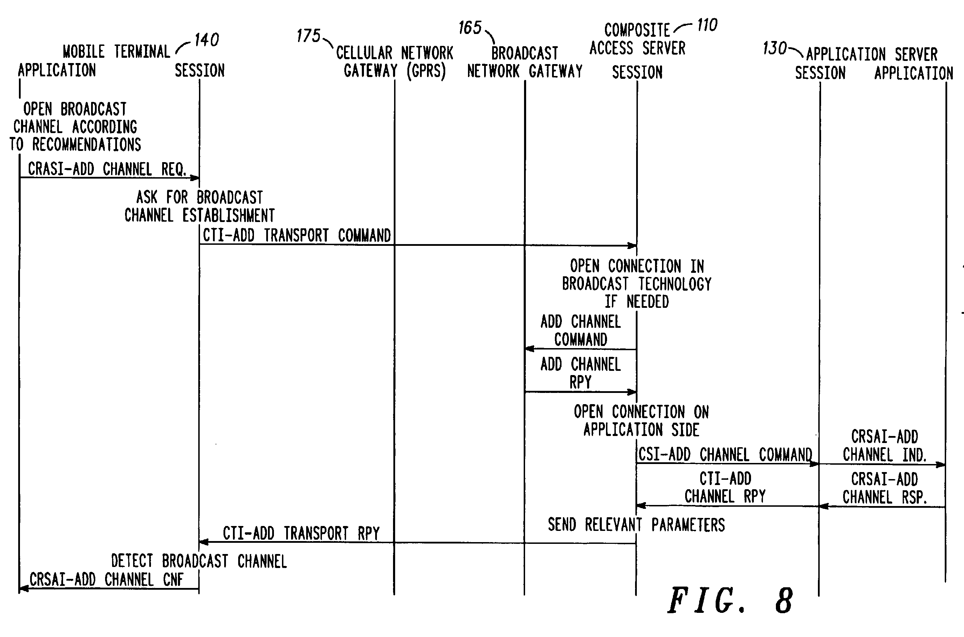

FIG. 8 shows the broadcast connection set-up step 530 in more detail. In the broadcast connection set-up procedure, the composite access server initiates the connection in the broadcast technology, after request from the terminal. Once established, the composite access server establishes connection with the application server. A confirmation is sent to the terminal once the application confirmed the link characteristics.

### 3.2.4 Transmission

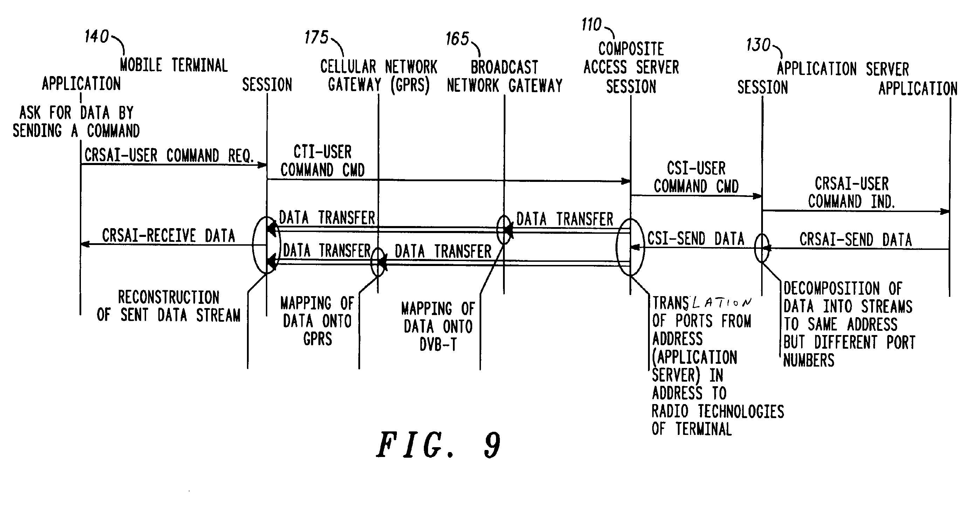

FIG. 9 shows the transmission step 540 in more detail. In the transmission procedure, once the transport channels are established according to the composite access server recommendations, the terminal initiates the interaction with the application server, by sending a specific command CRSAI-UserCommandReq.

It may be noted that the session layer in the terminal and the application server may provide segmentation/reassembly functionality appended with synchronization information.

### 3.2.5 Link keeping procedure

Based on network management alarms, changes in the terminal environment, changes in the application requirements, etc., the composite access server has the role of adapting the transmission resources. The example in FIG. 5 (step 550) shows the case when only link properties need to be changed. Another example would be when links need to be added or removed in order to benefit or take into account the radio environment.

The link keeping procedure basically consists in changing the call characteristics in such a way that new system requirements are met. It is expected that such procedure will actually have an impact on many calls. The call characteristics change can be explicit if messages are issued to provide new parameters, or implicit in particular when the number and type of radio links need only to change from a QoS point of view. In this latest case, approaches involving packet marking should be considered, in order to make faster link characteristics changes.

### 4 Mobility management principles

When a mobile terminal is roaming, the home CAS may not be the best located to manage the terminal call. Other CAS may be best located in the network, hence minimizing routing.

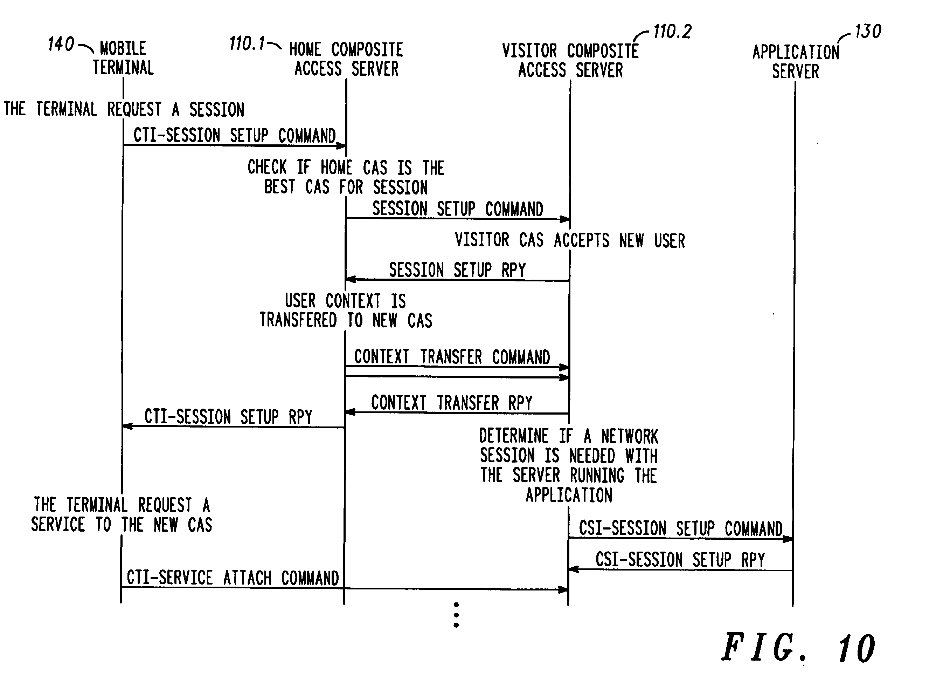

Referring now also to FIG. 10, based on the temporary address the terminal is using to set up a call, the home CAS 110.1 can determine whether it is the best suited to serve this call, or if another CAS can perform better. In the second case, a mobility management procedure is introduced, in order to transfer the context of the user (using the terminal) to the best CAS. This procedure is illustrated in FIG. 10.

The mobile terminal issues session set up request to the home CAS 110.1. The home CAS determines whether it is best suited to serve the request, based on for instance on the IP addresses the terminal exhibits. If a visitor CAS 110.2 is required, the home CAS contacts it to check whether it is available, and transfers to it the user context and profile. The home CAS 110.1 informs the terminal about the new CAS to use. The next user requests are directly transmitted to the visitor CAS 110.2.

Other technologies such as mobile IP could be used for mobility management purposes but would require additional capabilities in order to support context transfer from one node to another.

The mobility management procedure described earlier is triggered at connection set-up. However, network management procedures could force this procedure as well in case of, for example, CAS failure.

### 5 Resource management principles

Network management procedures are internal to the CAS 110, and network of CASs. User terminals indirectly contribute to efficient resource management because they explicitly express their QoS needs has well as terminal capabilities. The resource management actions, when applicable to the terminal users (radio technology handover, transceiver technology change, application channels switched on/off, etc), are communicated with the user call control procedures, through the choice of parameters that the CAS gives.

In summary, it will be understood that the present invention makes use of a new entity called the composite access server (CAS), which is an intermediary node (gateway and router) between a mobile terminal (client) and an application server. As exemplified above, its roles are to:
- dynamically tailor the service requested by a user, on behalf of the user, based on terminal capabilities and accessible radio and/or network resources;
- optimize the usage of radio and network resources at a system level, based on service requests and available radio technologies;
- ensure service continuity across multiple radio technologies; and
- enables parallel connections over multiple radio networks.

The CAS may be part of a network of CASs, each of which is attached to a respective geographical area. Thus, a user is attached to the CAS associated with the geographical area where the terminal is located. IT is to be noted that a given geographical area can be covered by more than one radio technology.

In order for the CAS to optimally tailor the application delivery, two types of signalling links are defined:
- between the CAS and the terminal: the terminal communicates information about its radio environment (available technologies) and terminal capabilities; and
- between the CAS and the application server: the CAS tailors, on behalf of the user, the service in order to best match the terminal capabilities and available radio resources and technologies

Optionally, the CAS can have a third signalling link between the CAS and a control entity of each radio core network in order for the CAS to evaluate (with control entity collaboration) the available capacity at terminal location for each technology; thus, the CAS can determine how to map data streams on radio technologies.

With the described arrangement, the CAS is able to perform radio resource optimization with one of the following means:
- the CAS has the possibility of splitting, or indicating to the application server to split, the contents into multiple streams, in order for the CAS to be able to map each stream on the radio technologies available at the terminal side;
- the CAS can perform traffic shaping and/or service translation in order to match the service data stream with the available resources; and
- the CAS is able to collect statistics about the service demand on the area under control, and dynamically adapt the set of radio technologies used in the area by indicating reconfigurability of base stations - this can consist in the CAS dynamically assigning spectrum to radio systems according to the nature of services required in specific geographical area (broadcast versus unicast services, symmetrical versus asymmetrical services, etc.).

It will be appreciated that the present invention provides a call control protocol that (i) is independent of underlying transport protocols and networks, and (ii) involves the application server 130, the CAS 110, the user terminal 140 and radio networks gateways in order to enable flexible spectrum assignment and base station reconfigurability.

It will be further appreciated that the present invention provides an Application Programming Interface for the user terminal that (i) enables the creation of application contexts, and (ii) implemented and executed in a distributed manner between the client (user terminal 140), server (application server 130) and the access server (CAS 110). It will be understood that the Application Programming Interface may not need to be supported by the content server if the CAS implements application proxys.

The present invention finds particular application in wireless communication systems such as the UMTS or GPRS systems. However, the inventive concepts contained herein are equally applicable to alternative fixed and wireless communications systems. Whilst the specific, and preferred, implementations of the present invention are described above, it is clear that variations and modifications of such inventive concepts could be readily applied by one skilled in the art.

Thus, a network system, method for transfer of data and server for use therein have been provided that alleviate some of the abovementioned disadvantages.

## Claims

1. A network system including a wired network (120), a plurality of wireless networks of different radio technologies (160, 170, 180), a data server (130), and a terminal (140) arranged for transfer of data therebetween across the wired and wireless networks upon request by a user; and comprising:
an access server (110) functionally connected between the data server and the terminal for dynamically facilitating transfer of data therebetween, the access server comprising means for splitting of content into multiple wireless data streams of different radio technologies and holding information on features of the terminal and means for holding information on radio resources available in the different wireless networks and for controlling the wired transfer of data between the data server to the access server and controlling the wireless transfer of the multiple split data streams of different radio technologies between the access server and the terminal over the different wireless networks in dependence on the held information, wherein the access server is adapted to provide a call control protocol that is independent of underlying transport protocols of the different networks.

2. The network system according to claim 1 wherein the access server (110) comprises at least one of A-F:
A means for controlling routing packet information between the access terminal and the terminal;
B call control means;
C user management means for controlling transfer of data dependent on charging and billing information;
D security means for controlling transfer of data dependent on security user and/or data security levels;
E gateway means for translation of session level protocols; and
F proxy means for transferring data as a proxy.

3. An access server (110) for use in a network system including a wired network (120)a plurality of wireless networks of different radio technologies (160, 170, 180), a data server (130), and a terminal (140) arranged for transfer of data therebetween across the wired network and split between at least two wireless networks upon request by a user, the access server being arranged for functional connection between the data server (130) and the terminal (140) for dynamically facilitating transfer of data across the wired and different wireless networks, the access server comprising means for splitting of content from the wired network into multiple data streams of different radio technologies and holding information on features of the terminal and means for holding information on radio resources available in the different wireless networks and for controlling the wired transfer of data between the data server to the access server and controlling wireless transfer of the multiple split data streams of different technologies between the access server and the terminal over the different wireless networks in dependence on the held information, wherein the access server is adapted to provide a call control protocol that is independent of underlying transport protocols of the different networks.

4. The access server (110) according to claim 3 further comprising at least one of G-L:
G means for controlling routing packet information between the access terminal and the terminal;
H call control means;
I user management means for controlling transfer of data dependent on charging and billing information;
J security means for controlling transfer of data dependent on security user and/or data security levels;
K gateway means for translation of session level protocols; and
L proxy means for transferring data as a proxy.

5. The access server (110) according to claim 3, wherein the access server is adapted to map the split data streams on different transport protocols and multiplexes application flows at a transport layer.

6. The access server (110) according to claim 3, further **characterized by** means for establishing a signalling link between the access server and a control entity of each wireless network such that the access server evaluates, with control entity collaboration, the available capacity at terminal location for each radio resource.

7. The access server (110) according to claim 3, wherein the access server is adapted to change the number of wireless links in response to changes in the radio environment of each wireless network.

8. A method for transfer of data between a data server (130) and a terminal (140) across a wired network (120) and a plurality of of different radio technologie wireless networks (160, 170, 180) upon request by a user, the method comprising the steps of:
providing an access server (110) functionally connected between the data server and the terminal for dynamically facilitating transfer of data therebetween;
splitting of content into multiple wireless data streams of different radio technologies;
holding information on features of the terminal and radio resources available in the wireless networks of different radio technologie; and
controlling the wired transfer of data between the data server to the access server and controlling transfer of the multiple split wireless data streams of different technologies between the access server and the terminal over the different wireless networks in dependence on the held information, wherein the access server provides a call control protocol that is independent of underlying transport protocols of the different networks.

9. The method according to claim 8 further comprising, in the access server (110), the steps of at least one of M-R:
M controlling routing of packet information between the access terminal and the terminal;
N call control;
O controlling transfer of data dependent on charging and billing information;
P controlling transfer of data dependent on security user and/or data security levels;
Q translating session level protocols; and
R transferring data as a proxy.

10. The method of claim 8, further **characterized by** the steps of:
mapping the split data streams on different transport protocols; and
multiplexing application flows at a transport layer.

11. The method of claim 8, further **characterized by** the steps of:
signalling a control entity of each wireless network; and
evaluating, with control entity collaboration, the available capacity at terminal location for each radio resource.

12. The method of claim 8, further **characterized by** the step of
changing the number of wireless links in response to changes in the radio environment of each wireless network.

## Patentansprüche

1. Netzwerksystem, das umfasst: ein verdrahtetes Netzwerk (120), eine Mehrzahl drahtloser Netzwerke von unterschiedlichen Funktechnologien (160, 170, 180), einen Datenserver (130) und ein Endgerät (140), das zur Übertragung von Daten zwischen diesen über die verdrahteten und drahtlosen Netzwerke nach einer Anfrage durch einen Anwender angeordnet ist; und das umfasst:
einen Zugriffsserver (110), der funktional zwischen den Datenserver und das Endgerät geschaltet ist, zum dynamischen Ermöglichen einer Übertragung von Daten zwischen diesen, wobei der Zugriffsserver umfasst: Mittel zum Aufspalten eines Inhalts in mehrere drahtlose Datenreihen unterschiedlicher Funktechnologien und Halten von Informationen auf Einrichtungen des Endgerätes und Mittel zum Halten von Informationen auf Funkressourcen, die in den verschiedenen drahtlosen Netzwerken zur Verfügung stehen, und zum Steuern der verdrahteten Übertragung von Daten von dem Datenserver zu dem Zugriffsserver und zum Steuern der drahtlosen Übertragung der mehreren aufgespalteten Datenreihen unterschiedlicher Funktechnologien zwischen dem Zugriffsserver und dem Endgerät über die verschiedenen drahtlosen Netzwerke in Abhängigkeit von den gehaltenen Informationen, wobei der Zugriffsserver adaptiert ist, um ein Anrufsteuerprotokoll zur Verfügung zu stellen, dass von zugrundeliegenden Transportprotokollen der verschiedenen Netzwerke unabhängig ist.

2. Netzwerksystem gemäß Anspruch 1, wobei der Zugriffsserver (110) mindestens einen der Punkte A-F umfasst:
A Mittel zum Steuern von Paket-Routing-Informationen zwischen dem Zugriffsendgerät und dem Endgerät;
B Anrufsteuerungsmittel;
C Anwendermanagementmittel zum Steuern einer Übertragung von Daten in Abhängigkeit von Abrechnungs- und Gebührenerfassungsinformationen;
D Sicherheitsmittel zum Steuern einer Übertragung von Daten in Abhängigkeit von Anwendersicherheits- und/oder Datensicherheitspegeln;
E Gateway-Mittel zur Übersetzung von Sitzungspegelprotokollen; und
F Proxy-Mittel zum Übertragen von Daten als ein Proxy.

3. Zugriffsserver (110) zur Verwendung in einem Netzwerksystem, das umfasst: ein verdrahtetes Netzwerk (120), eine Mehrzahl drahtloser Netzwerke von unterschiedlichen Funktechnologien (160, 170, 180), einen Datenserver (130) und ein Endgerät (140), das zur Übertragung von Daten zwischen diesen über das verdrahtete Netzwerk und aufgespaltet zwischen mindestens zwei drahtlosen Netzwerken nach einer Anfrage durch einen Anwender angeordnet ist, wobei der Zugriffsserver, für eine funktionale Schaltung zwischen den Datenserver (130) und das Endgerät (140), zum dynamischen Ermöglichen einer Übertragung von Daten über das verdrahtete Netzwerk und die verschiedenen drahtlosen Netzwerke angeordnet ist, wobei der Zugriffsserver umfasst: Mittel zum Aufspalten eines Inhalts von dem verdrahteten Netzwerk in mehrere Datenreihen von unterschiedlichen Funktechnologien und zum Halten von Informationen auf Einrichtungen des Endgeräts und Mittel zum Halten von Informationen auf Funkressourcen, die in den verschiedenen drahtlosen Netzwerken zur Verfügung stehen, und zum Steuern der verdrahteten Übertragung von Daten von dem Datenserver zu dem Zugriffsserver und Steuern einer drahtlosen Übertragung der mehreren aufgespalteten Datenreihen von unterschiedlichen Funktechnologien zwischen dem Zugriffsserver und dem Endgerät über die verschiedenen drahtlosen Netzwerke in Abhängigkeit von den gehaltenen Informationen, wobei der Zugriffsserver adaptiert ist, um ein Anrufsteuerprotokoll zur Verfügung zu stellen, das von den zugrundeliegenden Transportprotokollen der verschiedenen Netzwerke unabhängig ist.

4. Zugriffsserver (110) gemäß Anspruch 3, der weiterhin mindestens einen der Punkte G-L umfasst:
G Mittel zum Steuern von Paket-Routing-Informationen zwischen dem Zugriffsendgerät und dem Endgerät;
H Anrufsteuerungsmittel;
I Anwendermanagementmittel zum Steuern einer Übertragung von Daten in Abhängigkeit von Abrechnungs- und Gebührenerfassungsinformationen;
J Sicherheitsmittel zum Steuern einer Übertragung von Daten in Abhängigkeit von Anwendersicherheits- und/oder Datensicherheitspegeln;
K Gateway-Mittel zur Übersetzung von Sitzungspegelprotokollen; und
L Proxy-Mittel zum Übertragen von Daten als ein Proxy.

5. Zugriffsserver (110) gemäß Anspruch 3, wobei der Zugriffsserver adaptiert ist, um die aufgespalteten Datenreihen auf verschiedenen Transportprotokollen abzubilden und Anwendungsflüsse bei einer Transportschicht zu multiplexieren.

6. Zugriffsserver (110) gemäß Anspruch 3, weiterhin **gekennzeichnet durch** Mittel zum Einrichten einer Signalisierungsverbindung zwischen dem Zugriffsserver und einer Steuerentität eines jeden drahtlosen Netzwerkes, sodass der Zugriffsserver, in Zusammenarbeit mit der Steuerentität, die zur Verfügung stehende Kapazität bei einem Endgerätestandort für jede Funkressource abschätzt.

7. Zugriffsserver (110) gemäß Anspruch 3, wobei der Zugriffsserver adaptiert ist, um die Zahl von drahtlosen Verbindungen in Reaktion auf Änderungen in der Funkumgebung eines jeden drahtlosen Netzwerkes zu ändern.

8. Verfahren zur Übertragung von Daten zwischen einem Datenserver (130) und einem Endgerät (140) über ein verdrahtetes Netzwerk (120) und eine Mehrzahl von drahtlosen Netzwerken von unterschiedlichen Funktechnologien (160, 170, 180) nach einer Anfrage durch einen Anwender, wobei das Verfahren die folgenden Schritte umfasst:
Bereitstellen eines Zugriffsservers (110), der funktional zwischen den Datenserver und das Endgerät geschaltet ist, zum dynamischen Ermöglichen einer Übertragung von Daten zwischen diesen;
Aufspalten eines Inhalts in mehrere drahtlose Datenreihen von unterschiedlichen Funktechnologien;
Halten von Informationen auf Einrichtungen des Endgerätes und Funkressourcen, die in den drahtlosen Netzwerken von unterschiedlichen Funktechnologien zur Verfügung stehen; und
Steuern der verdrahteten Übertragung von Daten von dem Datenserver zu dem Zugriffsserver und Steuern einer Übertragung von den mehreren aufgespalteten drahtlosen Datenreihen von unterschiedlichen Funktechnologien zwischen dem Zugriffsserver und dem Endgerät über die verschiedenen drahtlosen Netzwerke in Abhängigkeit von den gehaltenen Informationen, wobei der Zugriffsserver ein Anrufsteuerprotokoll zur Verfügung stellt, das von zugrundeliegenden Transportprotokollen der verschiedenen Netzwerke unabhängig ist.

9. Verfahren gemäß Anspruch 8, das weiterhin, in dem Zugriffsserver (110), mindestens einen der Schritte M-R umfasst:
M Steuern eines Routings von Paketinformationen zwischen dem Zugriffsendgerät und dem Endgerät;
N Anrufsteuerung;
O Steuern einer Übertragung von Daten in Abhängigkeit von Abrechnungs- und Gebührenerfassungsinformationen;
P Steuern einer Übertragung von Daten in Abhängigkeit von Anwendersicherheits- und/oder Datensicherheitspegeln;
Q Übersetzen von Sitzungspegelprotokollen; und
R Übertragen von Daten als ein Proxy.

10. Verfahren gemäß Anspruch 8, weiterhin durch die folgenden Schritte **gekennzeichnet**:
Abbilden der aufgespalteten Datenreihen auf verschiedenen Transportprotokollen; und
Multiplexieren von Anwendungsflüssen bei einer Transportschicht.

11. Verfahren gemäß Anspruch 8, weiterhin durch die folgenden Schritte **gekennzeichnet**:
Signalisieren einer Steuerentität eines jeden drahtlosen Netzwerkes; und
Abschätzen, in Zusammenarbeit mit einer Steuerentität, der zur Verfügung stehenden Kapazität bei einem Erdgerätestandort für jede Funkressource.

12. Verfahren gemäß Anspruch 8, weiterhin durch den folgenden Schritt **gekennzeichnet**:
Ändern der Zahl von drahtlosen Verbindungen in Reaktion auf Änderungen in der Funkumgebung eines jeden drahtlosen Netzwerkes.

## Revendications

1. Système de réseaux comprenant un réseau câblé (120), une pluralité de réseaux sans fil de différentes technologies radio (160, 170, 180), un serveur de données (130), et un terminal (140) configuré pour un transfert de données entre eux sur le réseau câblé et les réseaux sans fil à la demande d'un utilisateur ; et comprenant :
un serveur d'accès (110) connecté en liaison fonctionnelle entre le serveur de données et le terminal pour faciliter de façon dynamique un transfert de données entre eux, le serveur d'accès comprenant des moyens pour diviser un contenu en plusieurs flots de données sans fil de différentes technologies radio et conserver des informations sur les caractéristiques du terminal et des moyens pour conserver des informations sur les ressources radio disponibles dans les différents réseaux sans fil et pour commander le transfert de données par câble entre le serveur de données et le serveur d'accès et pour commander le transfert sans fil des multiples flots de données divisés de différentes technologies radio entre le serveur d'accès et le terminal, sur les différents réseaux sans fil, en fonction des informations conservées, le serveur d'accès étant adapté pour mettre en oeuvre un protocole de commande de communications qui est indépendant des protocoles de transport sous-jacents des différents réseaux.

2. Système de réseaux selon la revendication 1, dans lequel le serveur d'accès (110) comprend au moins l'un des moyens A - F :
A des moyens pour commander le routage d'informations par paquets entre le terminal d'accès et le terminal ;
B des moyens de commande de communications ;
C des moyens de gestion d'utilisateur pour commander le transfert de données en fonction d'informations de taxation et de facturation ;
D des moyens de sécurité pour commander le transfert de données en fonction de l'utilisateur de sécurité et/ou du niveau de sécurité des données ;
E des moyens formant passerelle pour la traduction de protocoles de niveau session ; et
F des moyens formant serveur mandataire pour transférer des données en tant que serveur mandataire.

3. Serveur d'accès (110) à utiliser dans un système de réseaux comprenant un réseau câblé (120), une pluralité de réseaux sans fil de différentes technologies radio (160, 170, 180), un serveur de données (130), et un terminal (140) configuré pour un transfert de données entre eux sur le réseau câblé et une division entre au moins deux réseaux sans fil à la demande d'un utilisateur, le serveur d'accès étant configuré pour être connecté en liaison fonctionnelle entre le serveur de données (130) et le terminal (140) pour faciliter de façon dynamique un transfert de données sur le réseau câblé et les différents réseaux sans fil, le serveur d'accès comprenant des moyens des moyens pour diviser un contenu provenant du réseau câblé en plusieurs flots de données de différentes technologies radio et conserver des informations sur les caractéristiques du terminal et des moyens pour conserver des informations sur les ressources radio disponibles dans les différents réseaux sans fil et pour commander le transfert de données par câble entre le serveur de données et le serveur d'accès et pour commander le transfert sans fil des multiples flots de données divisés de différentes technologies entre le serveur d'accès et le terminal, sur les différents réseaux sans fil, en fonction des informations conservées, le serveur d'accès étant adapté pour mettre en oeuvre un protocole de commande de communications qui est indépendant des protocoles de transport sous-jacents des différents réseaux.

4. Serveur d'accès (110) selon la revendication 3, comprenant en outre au moins l'un des moyens G - L :
G des moyens pour commander le routage d'informations par paquets entre le terminal d'accès et le terminal ;
H des moyens de commande de communications ;
I des moyens de gestion d'utilisateur pour commander le transfert de données en fonction d'informations de taxation et de facturation ;
J des moyens de sécurité pour commander le transfert de données en fonction de l'utilisateur de sécurité et/ou du niveau de sécurité des données ;
K des moyens formant passerelle pour la traduction de protocoles de niveau session ; et
L des moyens formant serveur mandataire pour transférer des données en tant que serveur mandataire.

5. Serveur d'accès (110) selon la revendication 3, le serveur d'accès étant adapté pour mettre en correspondance les flots de données divisés sur différents protocoles de transport et pour multiplexer des flux d'application au niveau d'une couche de transport.

6. Serveur d'accès (110) selon la revendication 3, **caractérisé, en outre, par** des moyens pour établir une liaison de signalisation entre le serveur d'accès et une entité de contrôle de chaque réseau sans fil de telle sorte que le serveur d'accès évalue, avec la collaboration de l'entité de contrôle, la capacité disponible à l'emplacement du terminal pour chaque ressource radio.

7. Serveur d'accès (110) selon la revendication 3, le serveur d'accès étant adapté pour changer le nombre de liaisons sans fil en réponse à des changements de l'environnement radio de chaque réseau sans fil.

8. Procédé pour le transfert de données entre un serveur de données (130) et un terminal (140) sur un réseau câblé (120) et une pluralité de réseaux sans fil de différentes technologies radio (160, 170, 180) à la demande d'un utilisateur, le procédé comprenant les étapes consistant à :
prévoir un serveur d'accès (110) connecté en liaison fonctionnelle entre le serveur de données et le terminal pour faciliter de façon dynamique un transfert de données entre eux,
diviser un contenu en plusieurs flots de données sans fil de différentes technologies radio ;
conserver des informations sur les caractéristiques du terminal et les ressources radio disponibles dans les réseaux sans fil de différentes technologie radio ; et
commander le transfert de données par câble entre le serveur de données et le serveur d'accès et commander le transfert des multiples flots de données divisés sans fil, de différentes technologies, entre le serveur d'accès et le terminal, sur les différents réseaux sans fil, en fonction des informations conservées, le serveur d'accès mettant en oeuvre un protocole de commande de communications qui est indépendant des protocoles de transport sous-jacents des différents réseaux.

9. Procédé selon la revendication 8 comprenant, en outre, dans le serveur d'accès (110), au moins l'une des étapes M - R :
M commander le routage d'informations par paquets entre le terminal d'accès et le terminal ;
N commander les communications ;
O commander le transfert de données en fonction d'informations de taxation et de facturation ;
P commander le transfert de données en fonction de l'utilisateur de sécurité et/ou du niveau de sécurité des données ;
Q traduire les protocoles de niveau session ; et
R transférer des données en tant que serveur mandataire.

10. Procédé selon la revendication 8, **caractérisé, en outre, par** les étapes consistant à :
mettre en correspondance les flots de données divisés sur différents protocoles de transport ; et
multiplexer des flux d'application au niveau d'une couche de transport.

11. Procédé selon la revendication 8, **caractérisé, en outre, par** les étapes consistant à :
transmettre des signalisations à une entité de contrôle de chaque réseau sans fil ; et
évaluer, avec la collaboration de l'entité de contrôle, la capacité disponible à l'emplacement du terminal pour chaque ressource radio.

12. Procédé selon la revendication 8, **caractérisé, en outre, par** les étapes consistant à :
changer le nombre de liaisons sans fil en réponse à des changements de l'environnement radio de chaque réseau sans fil.
